# EUROPEAN PATENT APPLICATION

(11) **EP 0 581 592 A1**
(43) Date of publication of application: **02.02.1994**
(21) Application number: 93305996.6
(22) Date of filing: 29.07.1993
(51) Int. Cl.: B60N 2/42

(54) **Vehicle seat having braking means for preventing forward movement**

(30) Priority: 30.07.1992 GB 9216245
(71) Applicant: FLIGHT EQUIPMENT AND ENGINEERING LIMITED, Leighton Buzzard, Bedfordshire LU7 8TB (GB)
(72) Inventor: Demopoulos, Andreas, Flight Equipment & Eng. Ltd., Leighton Buzzard, Bedfordshire, LU7 8TB (GB)
(74) Representative: Lishman, Peter David

(57) **Abstract**

A vehicle seat having a backrest part (4) hingedly connected to the frame so as to break forwardly about the hinged connection (5) from a normal substantially upright position includes braking means (8) for preventing forward movement of the backrest part (4) about the hinged connection (5) under forces equivalent to less than a predetermined maximum forward force applied to the top of the backrest part (4) but to permit forward movement of the backrest part (4) under greater forces against a reaction provided by the braking means. The backrest part (4) is preferably so constructed that no significant force may be applied to it by the knees of a passenger in a seat immediately behind. For example it may have an aperture (10) in the region which will be immediately in front of the knees of a passenger occupying a seat immediately behind. The aperture may be covered on the front and/or back of the backrest part (4) by a light surface element (11), capable of deformation, detachment or fracture under impact from the knees of a passenger to enable them to pass through the aperture (10) without applying significant force to the backrest part (4).

## Description

Vehicle seats which are arranged in forwardly- facing rows are commonly made so that each backrest can be folded forwardly about a hinge joint adjacent to the seat bottom. This is to facilitate transport of seating units and it has also been thought to contribute to the safety of passengers since in the event of a crash a passenger was thought likely to be thrown forwardly so that his head would strike the backrest of the seat in front. It was thought that if the backrest folded (or "broke") forwardly about the hinge joint when struck by the passenger's head that would reduce the impact. Seats for use in passenger aircraft are commonly adjusted so that a backrest will fold (or "break") forwardly when a load equivalent to about 14 kg. applied to the top of the backrest is applied in a forward direction.

Our research indicates that this arrangement actually does not improve passenger safety in a high speed vehicle crash in which forward motion of the vehicle is rapidly decelerated, such as an aircraft crash. We have found that in such a crash the first contact of a passenger thrown forwardly against the backrest of the seat in front is likely to be with the knees and/or hands and that the force thereby applied, together with the inertia of the backrest itself, is likely to be sufficient to cause it to break forwardly. That creates a larger space in which the head of the passenger can move forwardly with acceleration. The backrest will be stopped by striking a passenger (if present) occupying that seat in front or on reaching the end of its possible travel and there will then be a much more severe impact when the passenger's head strikes the backrest. We believe that the creation of that larger space and the resultant acceleration of passengers' heads is the cause of many head injuries in survivable crashes. This invention aims to reduce or eliminate that space.

According to this invention a vehicle seat comprising a frame for mounting in a vehicle, a seat bottom part mounted on the frame and a backrest part hingedly connected to the frame adjacent to the seat bottom so as to break forwardly about the hinged connection from a normal position is characterized by braking means for preventing forward movement of the backrest part about the hinged connection under forces equivalent to less than a predetermined maximum forward force applied to the top of the backrest part but to permit forward movement of the backrest part about the hinged connection under greater forces against a reaction provided by the braking means.

By a "normal" position of the backrest part is meant a substantially upright position like an ordinary chair backrest or a reclined position inclined rearwardly from such an upright position, such as is commonly provided for in vehicle seats.

The predetermined maximum forward force is calculated to be substantially in excess of a reference force which would produce a moment about the hinged connection equal to the maximum moment likely to be produced by the knees and/or hands of a passenger making initial contact with the backrest part when a crash occurs, as described above. Typically it may be twice or three times that reference force.

With this arrangement, the initial contact of the knees and/or hands of a passenger with the backrest part in a crash is unlikely to cause the backrest part to break forwardly, so no larger space is created for accelerating forward movement of the passenger's head. Whilst the passenger's head is likely to strike the backrest part earlier than with conventional arrangements, it will be travelling at a lower speed relative to the backrest part because of the shorter distance travelled and the risk of serious injury will be reduced.

The braking means may be combined with recline control means such as is commonly provided in vehicle seats to enable a passenger in a seat to adjust the angular position of the backrest part relative to the seat bottom part about the hinged connection.

Preferably the braking means is arranged to provide a progressively increasing reaction as the permitted forward movement of the backrest part proceeds. Then the passenger's head will be decelerated progressively once it has struck the backrest part, further reducing the risk of serious injury.

Further, according to the invention, a vehicle seat comprising a frame for mounting in a vehicle, a seat bottom part mounted on the frame and a backrest part hingedly connected to the frame adjacent to the seat bottom so as to break forwardly about the hinged connection from a normal position is characterized by braking means for preventing forward movement of the backrest part about the hinged connection under forces equivalent to less than a predetermined maximum forward force applied to the top of the backrest part but to permit forward movement of the backrest part about the hinged connection under greater forces against a reaction provided by the braking means which increases progressively as the permitted forward movement of the backrest part proceeds, the said braking means being combined with the usual recline control means which enables a passenger in the seat to adjust the angular position of the backrest part relative to the seat bottom part about the hinged connection, and a locking device to prevent any further forward movement of the backrest part after it has been returned to its normal position after permitted forward movement.

The backrest part may be and preferably is so constructed that no significant force may be applied to it in a forward direction in the region which will be immediately in front of the knees of a passenger properly seated in a seat immediately behind. That may be achieved most simply by providing an aperture in that region so that in the event of very rapid deceleration such as occurs in a crash the knees of a passenger occupying a seat immediately behind do not contact the backrest part, but pass into the aperture and strike the rear of the seat bottom, which may be suitably padded to reduce the risk of injury to the knees. However, providing an open aperture may be aesthetically undesirable, so an aperture may be provided only in the inner structure of the backrest part and be covered, particularly on the front and/or back of the backrest part, by a light surface element, capable of deformation or fracture under impact from the knees of a passenger to enable them to pass through the aperture without applying significant force to the backrest part.

The seat may include a connecting device between the braking means and the backrest part, either capable of disconnection when required or normally disconnected so that the backrest part may fold forwardly about the said connection in the usual way, but operative automatically under abnormal forward deceleration to connect the braking means to the backrest part.

The braking means is preferably arranged so as not to resist significantly the return of the backrest part to its normal substantially upright position after it has broken forwardly under a force equivalent to a force applied to its top greater than the said predetermined maximum forward force and may include a locking device to prevent any further forward movement of the backrest part after it has been returned to that normal position. This may be of particular importance for a seat which is located alongside an emergency escape door or window which might be obstructed by the forwardly-folded backrest part.

Embodiments of the invention are illustrated by way of example by the accompanying drawings, in which:
Figure 1 is a rear elevation of a seat,
Figure 2 is a side elevation of the seat,
Figure 3 shows details of a braking device combined with a recline control device which is included in the seat shown in Figures 1 and 2,
Figure 4 is a sectional view showing a detail of an alternative braking device which may be included in the seat shown in Figures 1 and 2,
Figure 5 is a sectional view on the line A-A of Figure 4,
Figure 6 is a side elevation of an inertia-operated locking device which may be included in the seat shown in Figures 1 and 2, and
Figure 7 is a section on the line B-B of Figure 6.

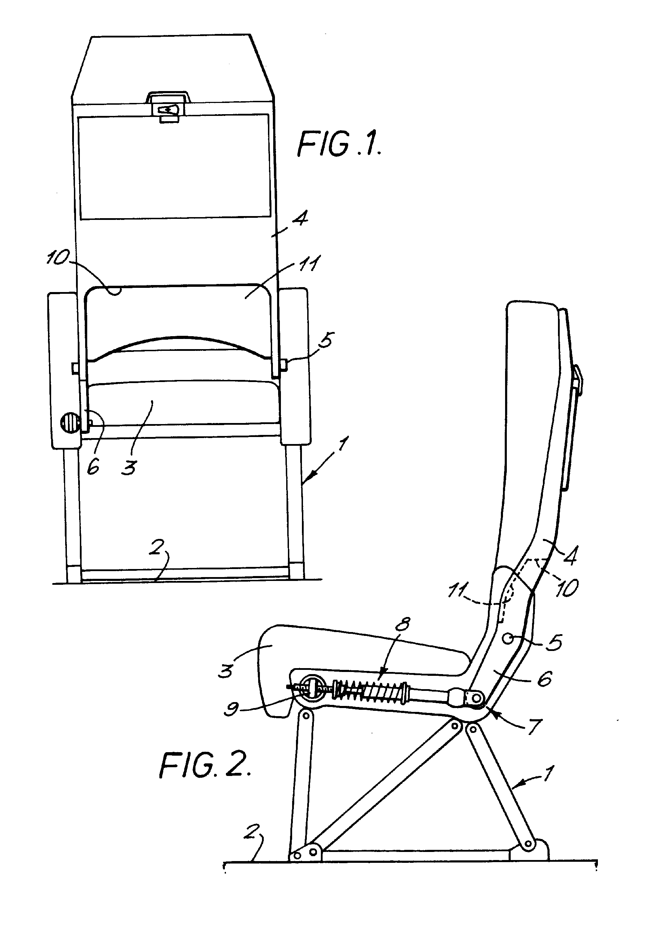

The seat shown in Figures 1 and 2 comprises a frame 1 designed to be secured to the floor 2 of a vehicle, such as a passenger aircraft, supporting a seat bottom part 3 which is upholstered as usual and a backrest part 4, hingedly connected to the frame 1 at each side by aligned pivot pins 5. An extension piece 6 is secured to one side of the backrest part 4 and extends beyond the pivot pin 5 on that side. The end of the extension is pivotally connected at 7 to the end of a braking device 8, the other end of which is adjust- ably connected to a lug 9 which is rotatably mounted on the frame 1.

An aperture 10 is formed in the lower portion of the backrest part 4 which will be directly in front of the knees of a passenger in a seat immediately behind. The aperture 10 is covered by a light surface element 11, continuous with the front surface of the remainder of the backrest part, capable of defonnation, detachment orfracture under impact from the knees of a passenger to enable them to pass through the aperture without applying significant force to the backrest part.

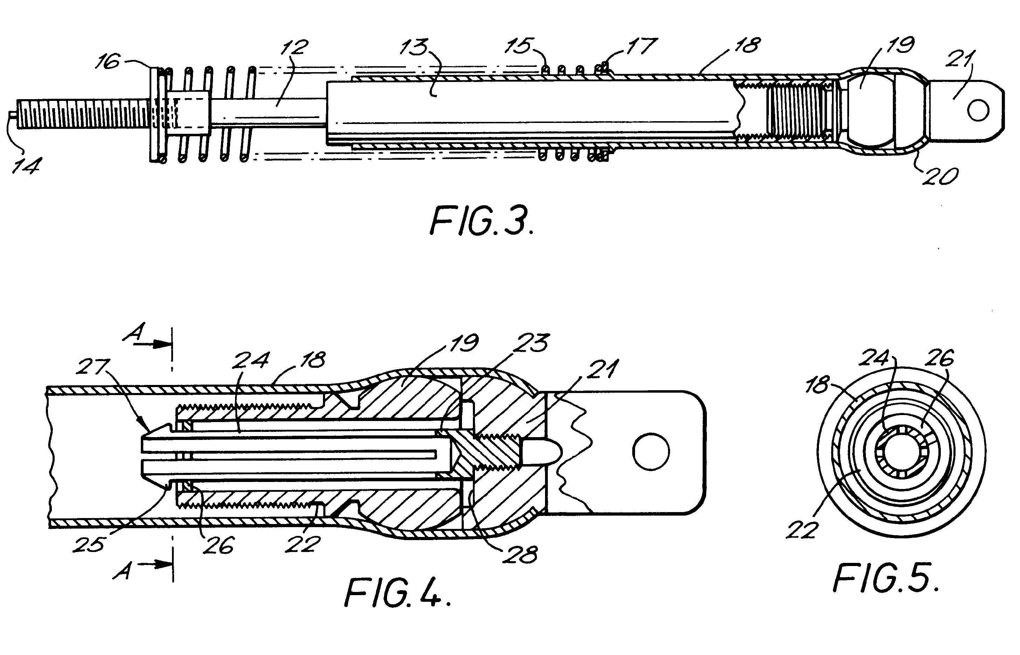

Details of the braking device 8 are shown in Figure 3. It includes the usual pneumatic or hydraulic recline control device comprising telescopic tubular parts 12 and 13 for controlling reclining movement of the backrest part 4 relative to the frame 1. A valve control member 14 at the end of the part 12 can be operated by a passenger occupying the seat to permit relative longitudinal movement between the parts 12 and 13. To recline the backrest part 4, the passenger operates the valve control member 14 and applies a rearward force against the backrest part with his back. The part 13 slides longitudinally over the part 12 until the control member 14 is released, whereupon the parts 12 and 13 are locked in their new relative position, holding the backrest part 4 in the reclined position chosen by the passenger. A compression spring 15 surrounds the parts 12 and 13, engaging abutments 16 and 17 to urge the part 13 longitudinally rearwardly with respect to the part 12 which is fixed to the frame 1. If the passenger operates the control member 14 without applying a rearward force to the backrest part, the spring will cause the part 13 to move rearwardly with respect to the part 12, causing the backrest part 4 to rotate about the pivot pins 5 towards an upright position. The construction and operation of these parts is well known and will not be described further.

The end of the part 13 enters a tube 18 and is connected by screw threads to a member having a ball-like head 19 which is of diameter somewhat larg- erthan the internal diameter of the tube 18 and is accommodated in an enlarged part 20 at the end of the tube 18. The enlarged part 20 is clenched over a clevis part 21 by which the braking device 8 is connected to the end 7 of the extension 6 (see Figure 2).

As described, under normal circumstances the recline control device in the braking device 8 operates in the usual way. However, if a forward force is applied to the backrest part 4 above the pivot pins 5 it can be seen from Figure 2 that the effect will be to pull the tube 18 rearwardly against the ball-like head cause the part of the tube 18 immediately adjacent to the enlarged part 20 to expand. If the sufficient force is maintained, the tube 18 will ride over the head 19, being progressively expanded. Such a sufficient force might be applied in the event of a crash by the head of a passenger in the seat immediately behind striking the backrest part 4. The riding of the tube 18 over the ball-like head 19 and its expansion has a braking effect on the backrest part 4. Thus the impact of the passenger's head with the backrest part will be reduced in comparison with that which occurs in a seat with conventional break-forward arrangement of the backrest. The passenger's head will be brought gradually to rest instead of being suddenly stopped. The material, wall thickness and diameter of the tube 18 and the diameter of the ball-like head 19 are selected so that the force necessary to expand the tube and draw it over the ball-like head produces a moment about the pivot pins 5 equal to the said predetermined maximum forward force applied to the top of the backrest. The wall thickness may be varied to produce a varying braking force as forward movement of the backrest part4 proceeds. For example, to provide a gradually increasing braking force, the wall thickness of the tube 18 may be increased progressively along its length from the enlarged part 20.

Once the backrest part4 has been brought to rest in a forwardly-inclined position by the braking device or because it has reached the end of its permitted rotation, it may be moved back to its upright position by applying a rearward force to its upper end, causing the ball-like head 19 to move towards the clevis part 21. As the tube 18 has been expanded, the braking device 8 provides no significant resistance to such return movement. For the same reason, the backrest part could then be folded forwardly again without significant resistance and may tend to remain in the forward position. That may be unsatisfactory, particularly for a seat adjacent to an emergency exit from a vehicle, since it might impede access to the exit. Figures 4 and 5 show a modification of the braking device 8 to avoid this.

In the modified braking device most of the parts are identical to those shown in Figure 3, are identifed by identical reference numbers and perform identical functions. However, the member having the ball-like head 19 is replaced by a tubular member 22 having a ball-like head 19 and a split tubular locking device 23 is secured to the clevis member 21 and extends coaxially through the tubular member 22. The tubular locking device is split throughout the major part of its length on two perpendicular diameters (see Figure 5) to provide four prongs 24 which are just longer than the tubular member 22 and somewhat enlarged at their ends to provide locking parts 25. As manufactured, the prongs are biassed outwardly from the position shown so that their locking parts 25 lie on a diameter greater than the internal diameter of the tubular member 22, but when assembled they are held in to a smaller diameter by a split spring circlip 26, of normal diameter greater than that internal diameter, fitted within the tubular member 22 near its end remote from the clevis member 21. The outer surfaces of the locking parts 25 are chamfered as shown at 27 for a purpose to be described.

In the event of sufficient forward force being applied to the backrest part 4, it can be swung forwardly about the pivot pins 5, drawing the tube 18 over the ball-like head of the tubular member 22 and expanding the tube as previously described. As the clevis member 21 draws the tube over the ball-like head, it also withdraws the split tubular locking device out of the tubular member 22, carrying with it the split circlip 26. When the circlip 26 is completely withdrawn from the tubular member 22 it is free to expand and allow the prongs 24 also to expand due to their outward bias.

If the backrest part is then moved towards its upright position, the ball-like head of the tubular member 22 can move back into the tube 18 without significant resistance. When it strikes the enlarged ends 25 of the prongs 24, their chamfered outer surfaces 27 will cause them to be compressed radially so that they re-enter the ball-like head. However, the splitcir- clip, having expanded, will be struck by the end of the ball-like head and be driven along the split tubular locking device 23 into a recess 28 provided in the end of the clevis member 21 to receive it. The prongs 24, no longer being constrained by the circlip 26, are free to expand as soon as their enlarged ends 25 project from the end of the tubular member 22 and they then lock behind its end, so locking the tubular member 22 to the clevis member 21 and preventing the backrest part 4 being moved forwardly again.

The invention is not limited to the use of braking devices as shown in Figures 3, 4 and 5. Many other forms of braking device could be used.

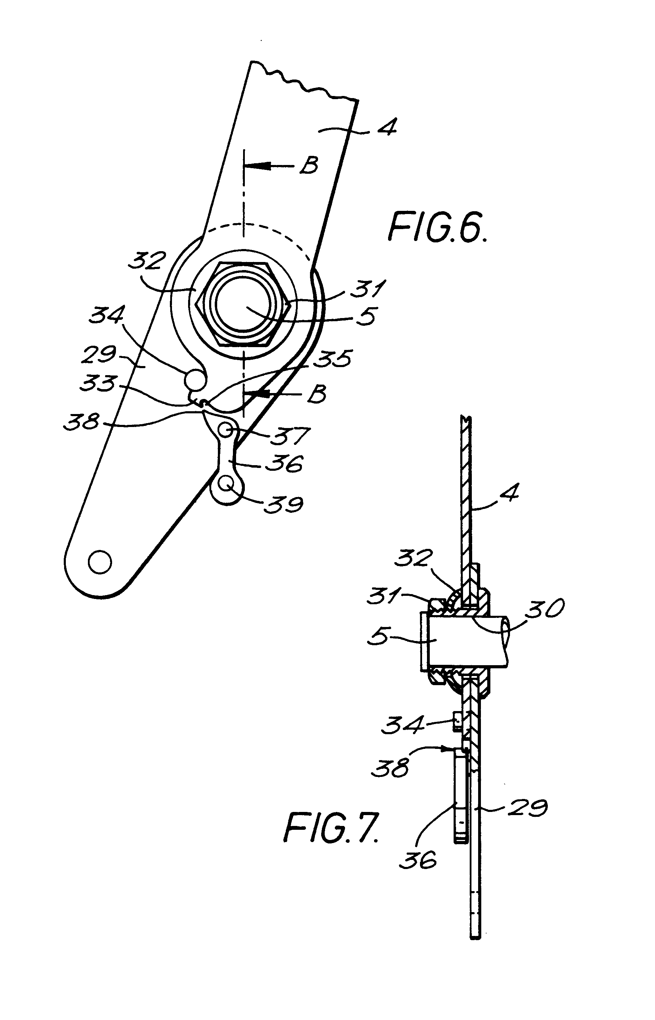

The braking device is required only in the event of a crash in which forward motion of the vehicle is rapidly decelerated, such as an aircraft crash, but its presence in the arrangement shown in Figures 1 and 2 prevents the usual provision for the backrest part 4 to break forwardly about the pivot pins 5 except under forces greater than a force equivalent to the pre-determined maximum forward force. That may be undesirable and Figures 6 and 7 show an inertia-operated connecting device between the braking device and the backrest part 4. In place of the extension piece 6 at one side of the backrest part 4 as shown in Figures I and 2 a separate element 29 is mounted on the pivot pin 5 at one side, to rotate about the pivot pin independently of the backrest part 4. A screw-threaded sleeve 30 fitted on the pin 5 and nut 31 compress a domed washer 32 to provide a frictional resistance to the break-forward movement. The nut may be adjusted to allow movement when a predetermined force, say 14 kg., is applied to the top of the backrest part. The end of the backest part 4 is formed with a hook 33 to engage a pin 34 secured to the element 29 so that reclining movement of the backrest part will be controlled by the usual pneumatic or hydraulic device as previously described, The hook 33 also has a reverse hook recess 35. A pivotal locking element 36 is connected to the element 29 so as to swing freely about a pin 37. The locking element illustrated is designed for inertia operation and has a nose 38, positioned to be just clear of the reverse hook recess 35 when the locking element hangs normally from its pivot pin 37, but movable to enter the reverse hook recess and prevent forward rotation of the backrest part 4 about the pivot pin 5 without simultaneously rotating the element 29. The end of the locking element 36 is weighted at 39 so that in the event of rapid deceleration of the vehicle it is automatically swung forwardly by inertia to engage the nose 38 in the reverse hook recess 35. In an alternative arrangement a locking element may be spring-urged into a position in which its nose will engage the reverse hook recess and manual means may be provided to release it when it is desired to break the backrest part 4 forwardly.

## Claims

1. A vehicle seat comprising a frame (1) for mounting in a vehicle, a seat bottom part (3) mounted on the frame and a backrest part (4) hingedly connected to the frame adjacent to the seat bottom so as to break forwardly about the hinged connection (5) from a normal position, characterized by braking means (18, 19) for preventing forward movement of the backrest part about the hinged connection underforces equivalent to less than a predetermined maximum forward force applied to the top of the backrest part (4) but to permit forward movement of the backrest part about the hinged connection (5) under greater forces against a reaction provided by the braking means (18, 19).

2. A vehicle seat as claimed in Claim 1 characterized in that the braking means (18, 19) is combined with the usual recline control means (8,14) which enables a passenger in the seat to adjust the angular position of the backrest part (4) relative to the seat bottom part (3) about the hinged connection (5).

3. A vehicle seat as claimed in Claim 1 or Claim 2 characterized in that the braking means (18, 19) is arranged to provide a progressively increasing reaction as the permitted forward movement of the backrest part(4) proceeds.

4. A vehicle seat as claimed in any preceding claim characterized in that the braking means (18, 19) is arranged to provide little resistance to return movement of the backrest part after permitted forward movement.

5. A vehicle seat as claimed in Claim 4 characterized by a locking device (23) to prevent any further forward movement of the backrest part (4) after it has been returned to its normal position after permitted forward movement.

6. A vehicle seat as claimed in any preceding claim characterized by a releasable connecting device (35, 36) between the braking means and the backrest part (4) enabling the backrest part (4) to be disconnected from the braking means (18,19) so that it may be folded forwardly about the hinged connection.

7. A vehicle seat as claimed in Claim 6 characterized in that the connecting device normally connects the backrest part to the braking means and may be disconnected when it is desired to fold the backrest part (4) forwardly.

8. A vehicle seat as claimed in Claim 6 characterized in that the connecting device (35, 36) is normally not connected between the braking means and the backrest part (4) so that the backrest part (4) may be folded forwardly when desired and the connecting device includes an inertia device (36) responsive to abnormal forward deceleration of the seat to connect the braking means (18, 19) to the backrest part (4).

9. A vehicle seat as claimed in any preceding claim characterized in that the backrest part (4) is so constructed that no significant force may be applied to it in a forward direction in the region which will be immediately in front of the knees of a passenger properly seated in a seat immediately behind.

10. A vehicle seat as claimed in Claim 9 characterized by an aperture (10) in the said region of the backrest part so that the knees of a passenger occupying a seat immediately behind may pass into the aperture.

11. A vehicle seat as claimed in Claim 10 characterized by a light surface element (11) covering the aperture (10) on one side of the backrest part (4), the said surface element (11) being capable of deformation, detachment or fracture under impact from the knees of a passenger to enable them to pass through the aperture (10) without applying significant force to the backrest part.

12. A vehicle seat comprising a frame (1) for mounting in a vehicle, a seat bottom part (3) mounted on the frame (1) and a backrest part (4) hingedly connected to the frame (1) adjacent to the seat bottom (3) so as to break forwardly about the hinged connection (5) from a normal position, characterized by braking means (18, 19 for preventing forward movement of the backrest part (4) about the hinged connection (5) under forces equivalent to less than a predetermined maximum forward force applied to the top of the backrest part (4) but to permit forward movement of the backrest part (4) about the hinged connection (5) under greater forces against a reaction provided by the braking means (18, 19) which increases progressively as the permitted forward movement of the backrest part (4) proceeds, the said braking means (18, 19) being combined with the usual recline control means (8, 14) which enables a passenger in the seat to adjust the angular position of the backrest part (4) relative to the seat bottom part (3) about the hinged connection (5), and a locking device (23) to prevent any further forward movement of the backrest part (4) after it has been returned to its normal position after permitted forward movement.

13. A vehicle seat as claimed in Claim 12 characterized by a releasable connecting device (35, 36) between the braking means (18, 19) and the backrest part (4) enabling the backrest part (4) to be disconnected from the braking means (18, 19) so that it may be folded forwardly about the hinged connection (5).

14. A vehicle seat as claimed in Claim 13 characterized in that the connecting device normally connects the backrest part to the braking means and may be disconnected when it is desired to fold the backrest part (4) forwardly.

15. A vehicle seat as claimed in Claim 12 characterized in that the connecting device (35, 36) is normally not connected between the braking means (18, 19) and the backrest part (4) so that the backrest part (4) may be folded forwardly when desired and the connecting device includes an inertia device (36) responsive to abnormal forward deceleration of the seat to connect the braking means to the backrest part.

16. A vehicle seat as claimed in Claim 12 characterized in that the backrest part (4) is so constructed that no significant force may be applied to it in a forward direction in the region which will be immediately in front of the knees of a passenger properly seated in a seat immediately behind.

17. A vehicle seat as claimed in Claim 16 characterized by an aperture (10) in the said region of the backrest part (4) so that the knees of a passenger occupying a seat immediately behind may pass into the aperture.

18. A vehicle seat as claimed in Claim 17 including a light surface element (11) covering the aperture (10) on one side of the backrest part (4), the said surface element (11) being capable of deformation, detachment or fracture under impact from the knees of a passenger to enable them to pass through the aperture without applying significant force to the backrest part.
